# EUROPÄISCHE PATENTANMELDUNG

(11) **EP 2 508 075 A1**
(43) Veröffentlichungstag der Anmeldung: **10.10.2012**
(21) Anmeldenummer: 11183151.7
(22) Anmeldetag: 28.09.2011
(51) Int. Cl.: A21B 3/15, A21B 1/48, F24C 15/16

(54) **Steinplatte für Backöfen**

(30) Priorität: 08.04.2011 DE 102011016451
(71) Anmelder: Daub Backtechnik GmbH, 21160 Hamburg (DE)
(72) Erfinder: Rücker, Andreas, 21039 Börnsen (DE)
(74) Vertreter: Glawe, Delfs, Moll

(57) **Zusammenfassung**

Die Erfindung betrifft Steinplatten (1) für Backöfen sowie Öfen (20) mit wenigstens einer erfindungsgemäßen Steinplatte (1). Die erfindungsgemäße Steinplatte (1) für Backöfen ist aus Steinguss (2) und weist eine Oberseite (5) und eine Unterseite (4) auf. An der Unterseite (4) der Steinplatte (1) ist wenigstens ein Fixierungselement (10, 11, 12, 13) zum Befestigen der Steinplatte (1) an einer Trägervorrichtung (6) angeformt. Der erfindungsgemäße Backofen weist eine in einem Backraum (21) angeordnete Trägervorrichtung (6) auf, an der wenigstens eine erfindungsgemäße Steinplatte (1) befestigt ist.

## Beschreibung

Die Erfindung betrifft Steinplatten für Backöfen sowie Öfen mit wenigstens einer erfindungsgemäßen Steinplatte.

Es ist bekannt, Backwaren in Steinöfen zu backen. Die zu backenden Teiglinge werden dabei auf einen erhitzen Stein bzw. eine Steinplatte abgelegt. Nach einer vorgegebenen Backdauer sind die Teiglinge fertig gebacken und werden aus dem Ofen entnommen. Steinöfen sorgen bspw. bei Brot gute Krusteneigenschaften. Ein Produkthinweis wie z. B. "Im Steinofen gebacken" wird als Qualitätsmerkmal einer Backware aufgefasst.

In Bäckereien und Backstuben werden häufig Durchlauföfen eingesetzt, um eine große Anzahl von gleichartigen Backwaren herzustellen. Die Backwaren werden dabei mit einem rezeptgemäßen Backprogramm gebacken, bei dem die Temperatur und/oder Verweildauer im Ofen vorgegeben sind.

Zum Backen von Backwaren in Durchlauföfen werden die Teiglinge (d. h. die zu backenden Backwaren) an einem Aufgabeende eines Durchlaufofens auf eine als Transportkette ausgebildete Transporteinrichtung aufgegeben. Diese Transportkette transportiert die Teiglinge in einer vorbestimmten Zeit durch den Backraum des Durchlaufofens, in dem eine vorgegebene Temperatur herrscht. Nach Durchlaufen des Backraumes sind die Teiglinge fertig gebacken und können an einem Ausgabeende von der Transportkette entnommen werden.

Es ist bekannt, dass die Transportkette in dem Bereich, der mit den Teiglingen in Kontakt kommt, mit Steinplatten versehen ist. Die Steinplatten hierfür sind aus Naturstein gehauen und typischerweise 100 bis 200 mm lang, 3000 mm breit und 22 mm dick. Die Dicke von 22 mm ist dabei zwingend erforderlich, um Bruchsicherheit zu gewährleisten. Bei einem Durchlaufofen mit einer Länge von 50 m ist die Transportkette auf einer Länge von ingesamt 100 m mit Steinplatten auszulegen. Ist die Transportkette 3000 mm breit, ergibt sich so ein Gesamtgewicht von 45 t allein für die Steinplatten.

Aufgrund ihres Gewichtes sind die beschriebenen Steinplatten aus Naturstein schwer handhabbar, sowohl bei der Montage als auch bei einem ggf. erforderlichen Austausch. Außerdem sind sie sehr kostenintensiv.

Bei kleineren Öfen ist es bekannt, dass Steinplatten direkt auf stationäre Heizelemente aufgelegt sind. Da sich die Heizelemente und somit auch die Steinplatten bei solchen Öfen nicht bewegen, werden die Steinplatten lediglich lose auf die Heizelemente gelegt. Die Steinplatten unterliegen also keiner besonderen Belastung. Es ist bekannt, dass aufgrund der geringen Belastung bei entsprechenden Öfen anstelle von Steinplatten aus Naturstein solche aus Steinguss verwendet werden können. Steinguss wird auch als Kunststein bezeichnet.

Aufgabe der vorliegenden Erfindung ist es, eine verbesserte Steinplatte aus Steinguss zu schaffen. Eine weitere Aufgabe der Erfindung ist es, einen verbesserten Backofen zu schaffen.

Gelöst werden diese Aufgaben durch eine Steinplatte gemäß dem Hauptanspruch bzw. durch einen Backofen gemäß dem nebengeordneten Anspruch. Vorteilhafte Weiterbildungen sind Gegenstand der abhängigen Ansprüche.

Demnach betrifft die Erfindung eine Steinplatte aus Steinguss für Backöfen mit einer Oberseite und einer Unterseite, wobei an der Unterseite der Steinplatte wenigstens ein Fixierungselement zum Befestigen der Steinplatte an einer Trägervorrichtung angeformt ist.

Es hat sich gezeigt, dass sich durch die erfindungsgemäße Anformung des wenigstens einen Fixierungselementes eine Steinplatte aus Steinguss auch in Öfen verwenden lässt, bei dem die Steinplatte nicht nur lediglich auf einem Heizelement aufliegt, sondern bewegt wird. Aufgrund des angeformten Fixierungselementes kann die Steinplatte aus Steinguss nämlich auch an beweglichen Trägervorrichtungen, wie z. B. an der Transportkette eines Durchlaufofens, befestigt werden. Durch die erfindungsgemäße Anformung des Fixierungselementes werden die Spannungen in der Steinplatte durch die Fixierung ausreichend gering gehalten, sodass Risse oder Sprünge in der Steinplatte vermieden werden können. Anders als bei nachträglich angebrachten Befestigungselementen wird die Steinplatte durch die angeformten Fixierungselemente nur gering belastet und strukturell praktisch nicht geschwächt. Die Steinplatte kann bevorzugt als Steinguss mit einem eingebetteten Gewebe als Armierung ausgeführt sein.

Bei dem Fixierungselement kann es sich um einen Federclip handeln, der in die Steinplatte eingegossen ist. Der Federclip wird also bereits beim Gießen der Steinplatte an diese angeformt, sodass eine nachträgliche Bearbeitung der Steinplatte nicht notwendig ist. Der Federclip ist möglichst klein dimensioniert, wobei jedoch weiterhin eine ausreichende Befestigung der Steinplatte an einer Trägervorrichtung gewährleistet wird. Es ist möglich, dass der Federclip mit dem eingebetteten Gewebe verbunden ist, um so eine bessere Verankerung des Federclips in der Steinplatte zu erreichen.

Das Fixierungselement kann auch als Stift ausgeführt sein, der in die Steinplatte eingegossen ist. Der Stift wird also bereits beim Gießen der Steinplatte an diese angeformt, sodass eine nachträgliche Bearbeitung der Steinplatte nicht notwendig ist. Der Stift ist möglichst klein dimensioniert, wobei jedoch weiterhin eine ausreichende Befestigung der Steinplatte an einer Trägervorrichtung gewährleistet wird. Es ist möglich, dass der Stift mit dem eingebetteten Gewebe verbunden ist, um so eine bessere Verankerung des Stifts in der Steinplatte zu erreichen. Der Stift kann außerdem ein Außengewinde aufweisen. Die Steinplatte kann dann mithilfe einer Schraubenmutter an einer Trägervorrichtung befestigt werden.

Bei dem Fixierungselement kann es sich auch um eine Schlaufe handeln, die in die Steinplatte eingegossen ist. Die Schlaufe ist bevorzugt aus Gewebematerial und kann mit dem eingebetteten Gewebe zur besseren Verankerung verbunden sein. Es ist auch möglich, das zur Armierung eingebettete Gewebe so auszugestalten, dass sich die gewünschte Schlaufe ergibt. In diesem Fall ist die Schlaufe einstückig mit dem eingebetteten Gewebe gebildet.

Es ist auch möglich, dass das Fixierungselement als tiefgezogener Formkörper ausgestaltet ist, wobei die Steinplatte wenigstens teilweise im Hohlbereich des Formkörpers angeordnet ist. Am Formkörper können wiederum Befestigungselemente vorgesehen sein, mit dem sich die Steinplatte an der Trägervorrichtung befestigen lässt. Es ist sogar möglich, dass der Formkörper beim Gießen als Form für die Steinplatte dient, der Hohlbereich des Formkörpers also mit Steinguss zu einer erfindungsgemäßen Steinplatte ausgegossen wird. Der Formkörper kann aus Metall oder Kunststoff sein.

Es ist bevorzugt, wenn die Steinplatte eine Länge von 50 mm und eine Dicke von 5 mm aufweist. Die Breite der Steinplatte ist beliebig, kann aber bevorzugt 1000 mm, 2000 mm oder 3000 mm betragen. Durch die geringere Dicke entsteht gegenüber Steinplatten aus Naturstein ein Gewichtsvorteil. Sie lassen sich auch deutlich einfacher handhaben.

Als Material für den Steinguss wird bevorzugt Feinbeton verwendet. Als Gewebe für die Armierung wird vorzugsweise ein Glasfasergewebe verwendet.

Die Erfindung betrifft weiterhin einen Backofen mit einem Backraum und einer darin angeordneten Trägervorrichtung, wobei auf der Trägervorrichtung eine erfindungsgemäße Steinplatte angeordnet ist.

Bei der Trägervorrichtung kann es sich um eine stationäre Heizplatte handeln. Mit der erfindungsgemäßen Steinplatte ist es aber auch möglich, dass sich die Trägervorrichtung innerhalb des Backraums des Backofens bewegen lässt, also im Backraum bewegbar ist. Es ist weiterhin möglich, dass es sich bei der Trägervorrichtung um eine Transportkette handelt, die als Transporteinrichtung eines Durchlaufofens ausgebildet ist, um Teiglinge von einem Aufgabeende zu einem Ausgabeende zu transportieren. Es ist weiter bevorzugt, wenn die Breite der Steinplatte der Breite der Transporteinrichtung entspricht.

Im Falle eines Durchlaufofens mit Transportkette kann diese also mit erfindungsgemäßen Steinplatten versehen sein. Da die erfindungsgemäßen Steinplatten in beliebigen Dimensionen gefertigt werden können, kann eine einfache Handhabung, insbesondere im Hinblick auf (De-)Montage und Austausch, sichergestellt werden. Insbesondere ist es möglich, einen Durchlaufofen schnell umzurüsten und die Steinplatten bspw. durch Stahlplatten, die vergleichbare Fixierungselemente wie die erfindungsgemäßen Steinplatten aufweisen, zu ersetzen.

Durch die freie Wahl der Länge der Steinplatten kann bei mit erfindungsgemäßen Steinplatten versehenen Transportketten außerdem die Umlenkung am Aufgabe- und Ausgabeende verbessert werden. Der Polygonzug, der bei der Umlenkung einer mit erfindungsgemäßen Steinplatten ausgelegten Transportketten entsteht, kann durch Wahl kürzere Längen der Steinplatten besser an die für die Umlenkung optimale Kreisform angenähert werden. Je geringer die Abweichung von der Kreisform ist, umso einfacher ist es, automatisiert Teiglinge am Ausgabeende der Transportkette zu entnehmen.

Die Erfindung wird nun anhand einiger Ausführungsbeispiele unter Bezugnahme auf die beigefügten Zeichnungen beispielhaft beschrieben. Es zeigen:
- Fig. 1: ein erstes Ausführungsbeispiel einer erfindungsgemäßen Steinplatte;
- Fig. 2: ein zweites Ausführungsbeispiel einer erfindungsgemäßen Steinplatte;
- Fig. 3: ein drittes Ausführungsbeispiel einer erfindungsgemäßen Steinplatte;
- Fig. 4: ein viertes Ausführungsbeispiel einer erfindungsgemäßen Steinplatte;
- Fig. 5: ein erstes Ausführungsbeispiel eines erfindungsgemäßen Backofens mit erfindungsgemäßen Steinplatten; und
- Fig. 6: eine Detailansicht des Backofens aus Figur 5.

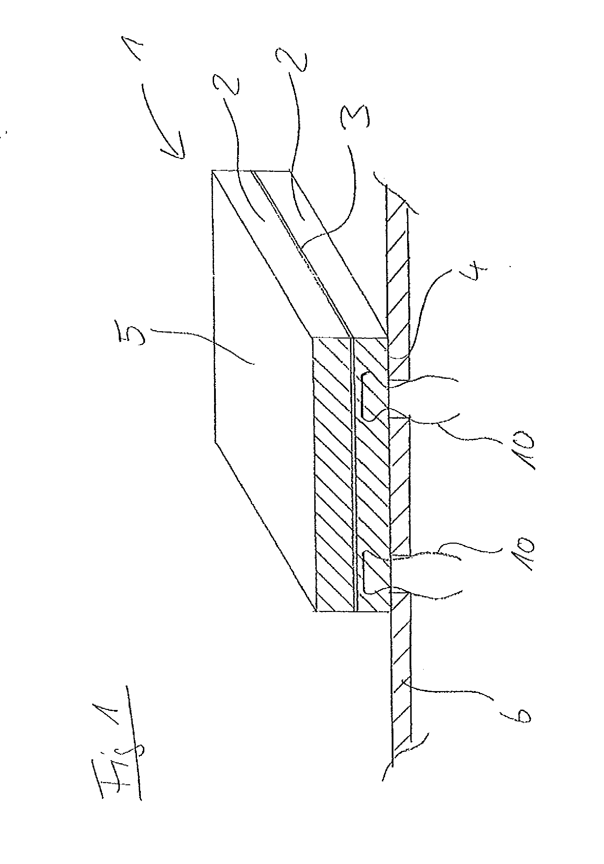

In Figur 1 ist ein erstes Ausführungsbeispiel einer erfindungsgemäßen Steinplatte 1 dargestellt. Die Steinplatte 1 umfasst einen Steinguss 2 bzw. Kunststein und ein darin eingebettetes Gewebe 3 als Armierung.

In den Steinguss 2 sind Federclipse 10 als Fixierungselemente eingebettet, und zwar so, dass sie and Unterseite 4 der Steinplatte 1 hervorstehen. Mithilfe der Federclipse 10 kann die Steinplatte 1 an der Trägervorrichtung 6 befestigt werden.

Die Oberseite 5 der Steinplatte 1 ist glatt.

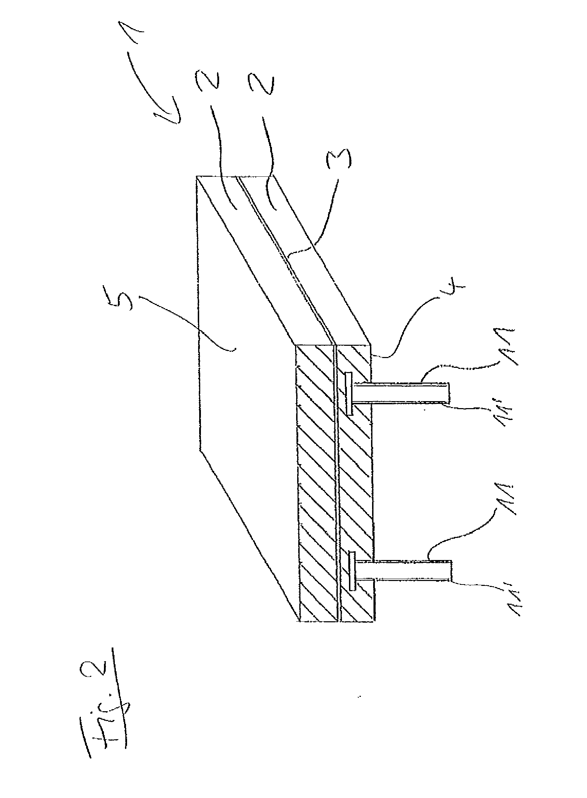

Das zweite Ausführungsbeispiel 1 in Figur 2 ähnelt dem ersten Ausführungsbeispiel aus Figur 1. Es wird im Folgenden daher lediglich auf die Unterschiede zu dem ersten Ausführungsbeispiel eingegangen und im Übrigen auf obige Ausführungen verwiesen.

Anstelle von Federclipsen 10 (vgl. Figur 1) sind bei der Steinplatte 1 in Figur 2 Stifte 11 vorgesehen, mit denen die Steinplatte 1 an einer Trägervorrichtung (nicht dargestellt) befestigt werden kann. Die Stifte 11 weisen ein Außengewinde 11' auf, sodass eine Befestigung mit Schraubenmuttern möglich ist.

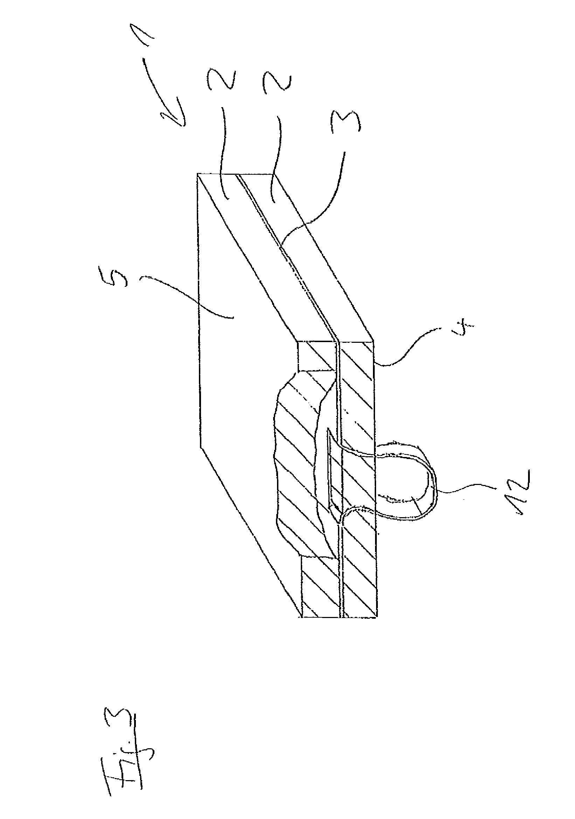

Das dritte Ausführungsbeispiel 1 in Figur 3 ähnelt den ersten beiden Ausführungsbeispielen aus Figuren 1 und 2. Es wird im Folgenden daher lediglich auf die Unterschiede zu den ersten beiden Ausführungsbeispielen eingegangen und im Übrigen auf obige Ausführungen verwiesen.

Anstelle von Federclipsen 10 (vgl. Figur 1) bzw. Stiften 11 (vgl. Figur 2) sind bei der Steinplatte 1 in Figur 3 Schlaufen 12 vorgesehen, mit denen die Steinplatte 1 an einer Trägervorrichtung (nicht dargestellt) befestigt werden kann. Die Schlaufen 12 sind einstückig mit dem Gewebe 3 ausgebildet, sodass eine gute Verankerung der Schlaufen 12 in der Steinplatte 1 gewährleistet ist.

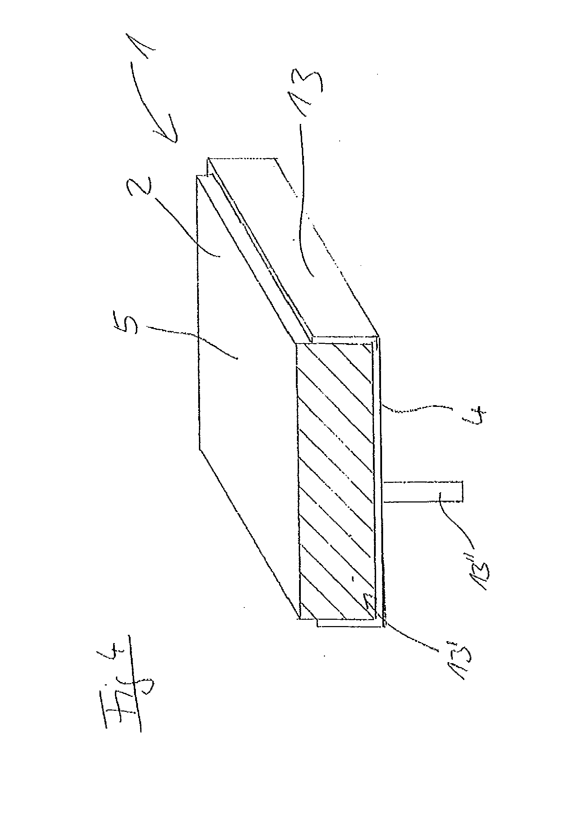

In Figur 4 ist ein viertes Ausführungsbeispiel einer erfindungsgemäßen Steinplatte 1 dargestellt. Die Steinplatte 1 umfasst als Fixierungselement einen tiefgezogenen Formkörper 13 und Steinguss 2, wobei der Steinguss 2 zu einem Teil im Hohlbereich 13' des Formkörpers 13 angeordnet ist. Der Formkörper 13 war bereits Teil der Form für den Steinguss 1 und wurde so ausgegossen, dass eine feste Verbindung zwischen Formkörper 13 und Steinguss 2 besteht.

Der Formkörper 13 ist aus Metall und stützt den Steinguss 2. Daher kann auf eine Armierung durch ein Gewebe 3 (vgl. Figuren 1 bis 3) verzichtet werden.

Der Formkörper 13 bildet die Unterseite 3 der Steinplatte 1 und weist Befestigungselemente 13" auf, mit denen die Steinplatte 1 an einer Trägervorrichtung (nicht dargestellt) befestigt werden kann. Die Oberseite 5 der Steinplatte 1 ist glatt.

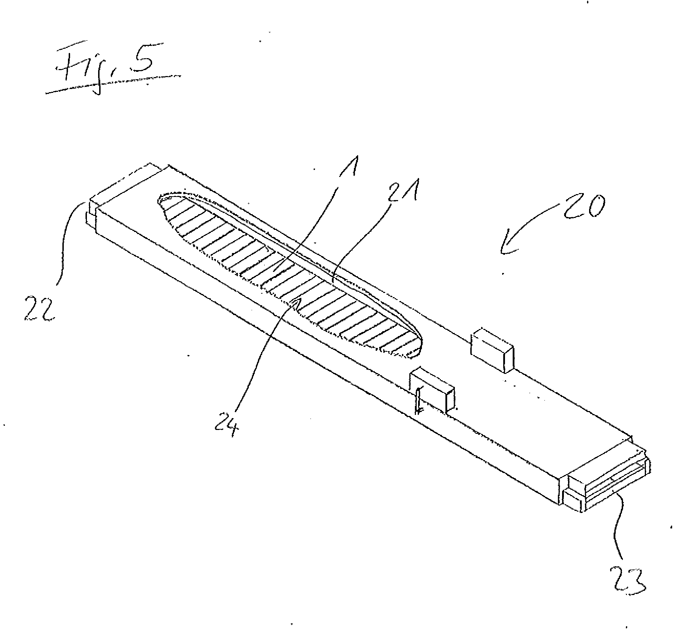

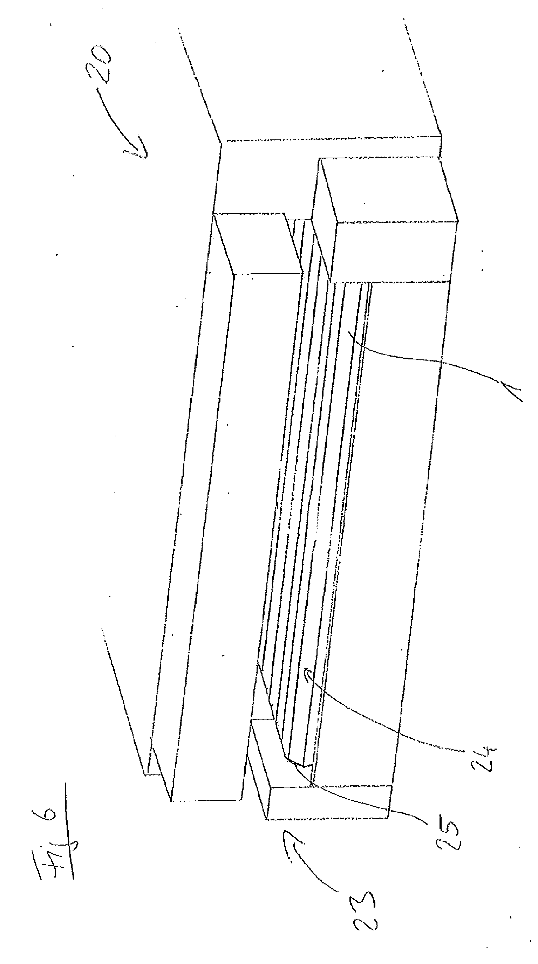

In Figuren 5 und 6 ist ein erfindungsgemäßer Durchlaufofen 20 dargestellt.

Der Durchlaufofen 20 umfasst einen innerhalb eines Gehäuses ausgebildeten Backraum 21, ein Aufgabeende 22 und ein Ausgabeende 23. Innerhalb des Backraums 21 sind Heizelemente (nicht dargestellt) vorgesehen, die sich so regeln lassen, dass innerhalb des Backraumes 21 eine gewünschte Temperatur erreicht wird. Weiterhin ist eine Transportkette 24 als Transporteinrichtung vorgesehen, mit der Teiglinge von dem Aufgabeende 22 durch den Backraum 21 zu dem Ausgabeende 23 transportiert werden können. Die Transportkette 24 erstreckt sich jeweils zwischen einer Umlenkwelle 25 am Ausgabeende 23 und einer Umlenkwelle am Aufgabeende 22 (nicht dargestellt, jedoch analog zur Umlenkwelle 25 am Ausgabeende 23).

Am Aufgabeende 22 können Teiglinge auf die Transportkette 24 aufgegeben werden. Sie werden dann von diesen durch den Backraum 21 zum Ausgabeende 23 gefördert, wo sie wieder entnommen werden können. Aufgrund der im Backraum 21 herrschenden Temperatur werden die am Aufgabeende 22 auf die Transportkette 24 aufgegebenen Teiglinge beim Durchlaufen des Backraums 21 gebacken. Durch korrekte Wahl der Temperatur im Backraum 21 sowie der Geschwindigkeit der Transportkette 24, über die die Verweildauer der Teiglinge im Backraum 21 bestimmt wird, kann sichergestellt werden, dass die Teiglinge am Ausgabeende 23 fertig gebacken sind bzw. den gewünschten Backgrad erreicht haben.

Die Transportkette 24 ist mit erfindungsgemäßen Steinplatten 1 versehen, wobei es sich beliebig um Steinplatten 1 gemäß einer der in Figuren 1 bis 4 dargestellten Ausführungsformen handeln kann. Die Transportkette 24 ist im dargestellten Ausführungsbeispiel also die Trägervorrichtung 6. Die Steinplatten 1 sind jeweils 5 mm dick und weisen eine Breite auf, die der der Transportkette 24 entspricht, hier 3000 mm. Die Länge der Steinplatten 1 beträgt 50 mm oder weniger. Dadurch wird sichergestellt, dass der bei der Umlenkung an den Umlenkwellen 25 entstehende Polygonzug der Transportkette 24 nur gering von der optimalen Kreisform abweicht.

## Patentansprüche

1. Steinplatte (1) aus Steinguss (2) für Backöfen mit einer Oberseite (5) und einer Unterseite (4),
**dadurch gekennzeichnet, dass**
an der Unterseite (4) der Steinplatte (1) wenigstens ein Fixierungselement (10, 11, 12, 13) zum Befestigen der Steinplatte (1) an einer Trägervorrichtung (6) angeformt ist.

2. Steinplatte (1) nach Anspruch 1,
**dadurch gekennzeichnet, dass**
das Fixierungselement (10, 11, 12, 13) ein in die Steinplatte (1) eingegossener Federclip (10) ist.

3. Steinplatte (1) nach Anspruch 1,
**dadurch gekennzeichnet, dass**
das Fixierungselement (10, 11, 12, 13) ein in die Steinplatte (1) eingegossener Stift (11), vorzugsweise mit Außengewinde (11'), ist.

4. Steinplatte (1) nach Anspruch 1,
**dadurch gekennzeichnet, dass**
das Fixierungselement (10, 11, 12, 13) eine in die Steinplatte (1) eingegossene Schlaufe (12) ist.

5. Steinplatte (1) nach Anspruch 1,
**dadurch gekennzeichnet, dass**
das Fixierungselement (10, 11, 12, 13) ein tiefgezogener Formkörper (13) ist, wobei der Steinguss (2) wenigstens teilweise im Hohlbereich (13') des tiefgezogenen Formkörpers (13) angeordnet ist.

6. Steinplatte nach einem der vorhergehenden Ansprüche,
**dadurch gekennzeichnet, dass**
die Steinplatte (1) ein in den Steinguss (2) eingegossenes Gewebe (3) als Armierung aufweist, wobei vorzugsweise die Schlaufe (12) einstückig mit dem Gewebe (3) ausgebildet ist.

7. Backofen mit einem Backraum (21) und einer im Backraum (21) angeordneten Trägervorrichtung (6),
**dadurch gekennzeichnet, dass**
auf der Trägervorrichtung (6) wenigstens eine Steinplatte (1) gemäß Anspruch 1 befestigt ist.

8. Backofen nach Anspruch 7,
**dadurch gekennzeichnet, dass**
die wenigstens eine Steinplatte (1) gemäß einem der Ansprüche 2 bis 6 ausgebildet ist.

9. Backofen nach Anspruch 7 oder 8,
**dadurch gekennzeichnet, dass**
die Trägervorrichtung (6) im Backraum (21) bewegbar ist.

10. Backofen nach Anspruch 7 oder 8,
**dadurch gekennzeichnet, dass**
der Backofen ein Durchlaufofen (20) und die Trägervorrichtung (6) eine im Backraum (21) angeordnete Transporteinrichtung, vorzugsweise eine Transportkette (24), ist, um Teiglinge von einem Aufgabeende (22) zu einem Ausgabeende (23) zu transportieren.

11. Backofen nach Anspruch 10,
**dadurch gekennzeichnet, dass**
die Breite der wenigstens einen Steinplatte (1) der Breite der Transporteinrichtung entspricht.
